Europäisches Patentamt

European Patent Office

Office européen des brevets

(11) Publication number: **0 318 474 B1**

# EUROPEAN PATENT SPECIFICATION

(45) Date of publication of patent specification: 30.06.93

(51) Int. Cl.5: **B60K 41/08**, B60K 41/22, B60K 41/28

(21) Application number: **87901107.0**

(22) Date of filing: **30.01.87**

(86) International application number:
**PCT/IT87/00005**

(87) International publication number:
**WO 88/05735 (11.08.88 88/18)**

(54) **AN ELECTRONIC SERVO CHANGE GEAR, FOR MAKING AUTOMATIC THE GEAR CHANGE.**

(43) Date of publication of application:
**07.06.89 Bulletin 89/23**

(45) Publication of the grant of the patent:
**30.06.93 Bulletin 93/26**

(84) Designated Contracting States:
**DE FR GB SE**

(56) References cited:
**EP-A- 0 114 468      EP-A- 0 155 043
CH-A- 635 278        DE-A- 3 151 087
DE-A- 3 513 279      FR-A- 2 169 598
US-A- 2 527 727      US-A- 3 125 893
US-A- 3 628 642      US-A- 4 499 793**

(73) Proprietor: **SANTOVETTI, Rodolfo
Via S. Ilaria, 2
I-00199 Roma(IT)**

(72) Inventor: **SANTOVETTI, Rodolfo
Via S. Ilaria, 2
I-00199 Roma(IT)**

(74) Representative: **Mascioli, Alessandro, Prof.Dr.
c/o A.N.D.I. Associazione Nazionale degli Inventori Via Urbana, 20
I-00184 Roma (IT)**

Rank Xerox (UK) Business Services
(3.10/3.6/3.3.1)

## Description

The present invention concerns a servo change gear for the direction and performing of the change of speed in a vehicle, a lorry or a motorcycle, automatically according to the running of the motor, to the speed of the vehicle and to the will of the driver expressed by means of the foot accelererator. It is intended to be an independent device that may be applied, with little work, to any kind of vehicle and working making use of the same elements (clutch and gear) and removable anytime with a simple switch-over.

Said device may be applied at the moment of realization of the vehicle or later on.

The object of the present invention is a device external to the common gear, that may be applied on any kind of vehicle, for making the manual operation of changing gear automatic.

It is already well known that the automatism of the automatic change gears known until now consists in a rather complicated means that replaces the common change gear. The automatic change gears of the known kind are applied during the assembly of the vehicle and completely replace the manual change. They work in a nearly exclusively mechanical. A vehicle with a traditional automatic change gear works only in automatism.

Up to now there is an US Patent N. 4 499 793 Long J. Jow Long S Jow, which needs beyond the actuators sensors and computer which are means of the automatism, also a special exchange box, a special box for the friction and a special exchange lever.

These are described and shown in detail in the Us Patent N. 4 499 793.

The mounting on a vehicle of the above mentioned mechanism involves, by the way, the replacing of the change box of the friction box, of the friction pedal and lever and the inserction of the some number of similar parts specifically shown and realized.

The aim of the invention is that to realize an automatic servo change gear for automatically changing gear in a vehicle moved by a piston engine making a different use of the actuators (different in number and function) described in the US Patent N. 4 499 793 beyond making use of different mechanisms for the exchange friction and programs.

The electronic servo change according to the present invention moreover makes use of the original transmission of the constructing House with devices which acting parallelly to the original change commands.

The electronic servo change gear according to the present invention consists in the following elements:
- five electronic sensors;
- three groups of electromechanical or hydraulic servo controls;
- a computer;
- pushbuttons for the manual controls.

The present invention will be described more in detail herein below relating to the attached drawings in which some preferred embidoments are shown.

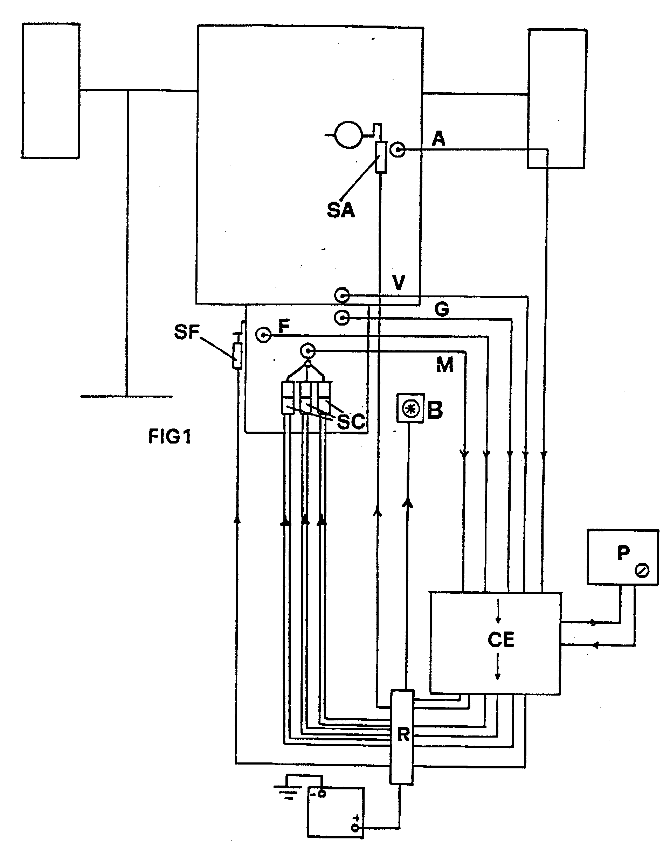

Figure 1, shows a block scheme of the whole device.

Figures 2 and 3, show two different mechanisms for the change gears that may be applied onto vehicles with a change having the gears in the direction of an "H".

Figure 4, shows a variant of the mechanism of the preceding figures, provided for application onto vehicles provided with a change difficult to reach.

Figure 5, shows the scheme of a variant of the present invention, provided for those vehicles having a gear shape different from the ones mentioned in the preceding figures.

other operations connected thereto (clutch etc.). As it may be easy to immagine, each single car put on the market has a disposition and a characteristic figure of the gearbox, of the carburetor etc., as well as a particular movement of the directions coming therefrom (gear lever, friction lever, throttle lever). Therefore it is impossible showing, for all this number of mechanisms, to show one single variant for all cars.

Therefore, in above mentioned figures some main variants are shown for the illustration of the general working of the device according to the present invention.

The assemblying of the same onto the vehicles is obtained by means of brakes and supports fitting for each kind of vehicle and comprised in a "kit".

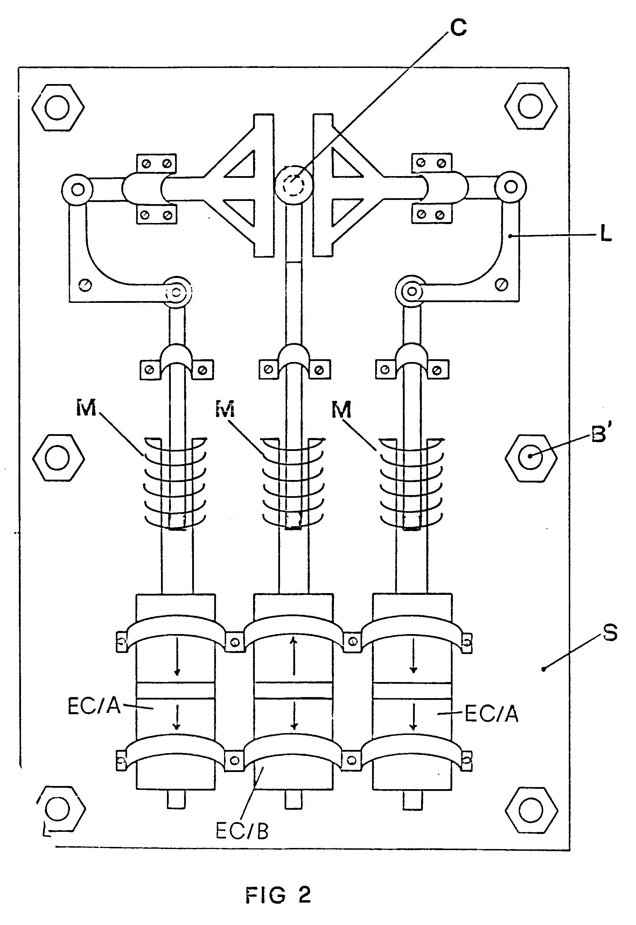

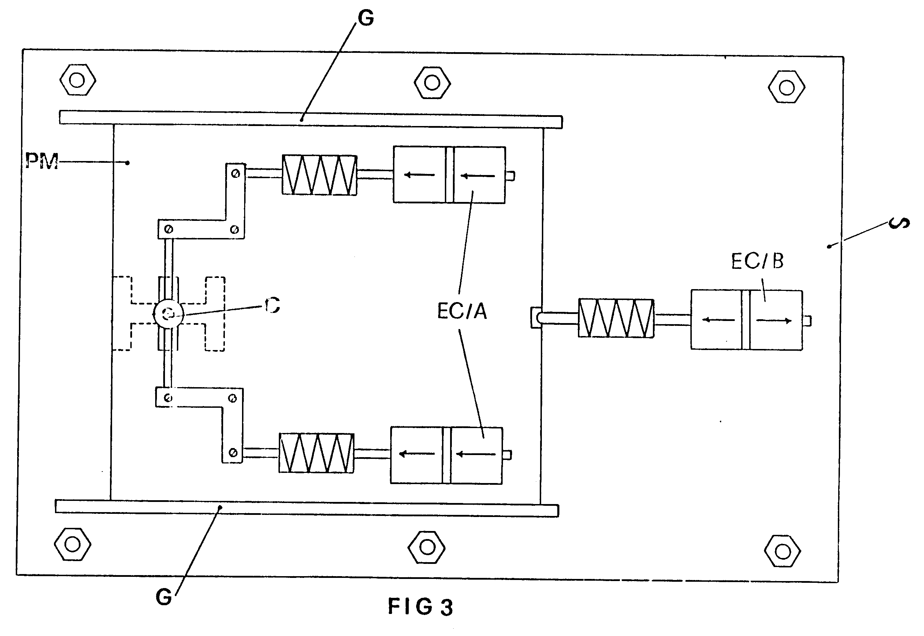

The mechanism for the material change SC of the gears, relating to that variant in which said gears are placed in form of an "H", is exemplified in two different variants in figures 2 and 3, and consists in three electromagnets EC (or movable plate PM sliding along a guide G - figure 3), fixed to a metal support S, the co-ordinate intervention thereof at the level of the gearbox or at the basis of the control stick, produces the movement of lever C pushing the same into the position corresponding to each gear. The metal support is provided for each model, for being fixed by means of bolts B' to the gearbox or to any other fix part.

Two kinds of electromagnets EC are provided:

EP 0 318 474 B1

- (EC/A), out of two sections, for the production of two releases in the same direction: the first release leads the core of the EC frontwards of a determined number of centimeters, the second release continues the same movement of the same length. The first movement will bring the lever C into the neutral position, making the same get out of the gear in which it was; the second movement that takes place only after the intervention of the EC/B, pushes the lever C further, thus engaging a gear. One EC/A disengages the 2nd, 4th and back gear and engages the 1st, 3rd and 5th gear; the other EC/A disengages the 1st, 3rd and 5th gear and engages the 2nd, 4th and back gear.

- (EC/B), out of two sections, provided for two releases, each in a sense opposite to the other so as to bring the core of the EC forewards or backwards of a determined number of centimeters. The movement of this EC/B pushes the gear lever along the horizontal line of the "H", to the left at the level of the 1st or 2nd gear or to the right at the level of the 5th or back gear. When the EC/B is in resting position the lever automatically gets placed at the level of the 3rd and 4th gear, due to the inner spring provided in all series gears.

The push of the EC is not directly performed onto the change lever, but on a spring M which, once wound up, directly transmits to the lever the movement in a softened way: otherwise, the direct, harsh shock of the EC might damage the synchronizing gears.

The gear change takes place through the coordinate movement of the EC directed by the exchange in a precise order. Generally, the operations take place as follows:

- release of the clutch (accelerator anulment);
- first release of the EC/A that disengages the gear and places the lever in neutral position;
- release of the EC/B that brings the lever at the level of the programmed gear;
- second release of the EC/A that pushes the lever into the gear;
- engagement of the clutch (free accelerator).

The exchange gives the directions in this order, but does not proceed to the following order if the preceding one has not been fullfilled.

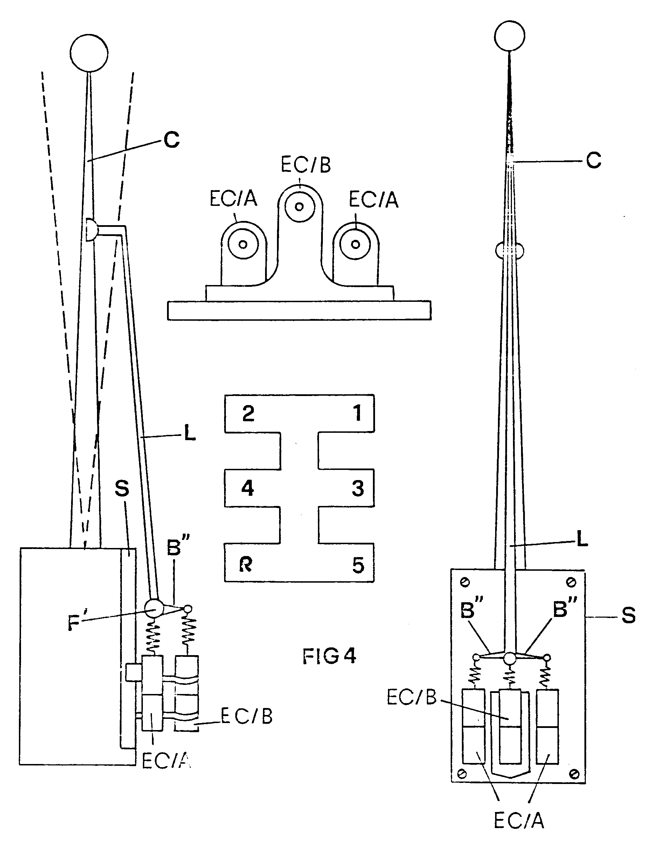

Figure 4 shows the same mechanism that is to be fixed nearby the control stick, and that changes the gear directly acting on the same by means of a lever L with a plurality of arms B'', kept by a fulcrum F'.

This solution has been thought for those vehicles in which it is not possible to intervene on the gearbox due to the location of the same.

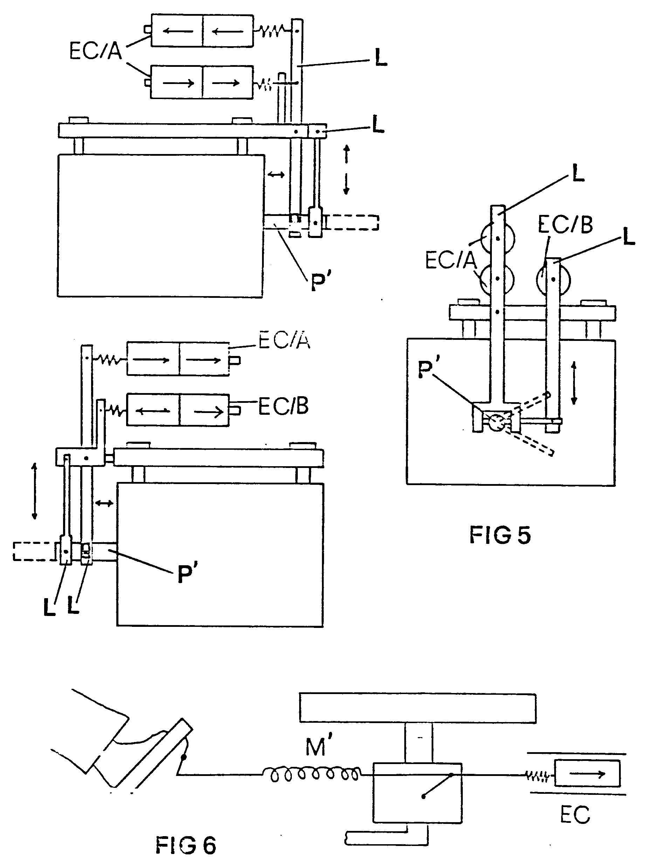

Figure 5 shows a scheme of a device for such vehicles having the change gear with the gear position not in the shape of an "H".

A pin P' projects from the gearbox - being the control of the gears - that may assume three positions: one being more projecting, a medium one (neutral) and a more recessed. Furthermore, said pin may rotate around itself assuming two positions, beyond the resting one: clockwise: position of first and second gear; anti-clockwise: 5th and back gear. In the central position, the resting position, the pin may engage the third and fourth gear.

The first or second, third or fourth, fifth or back gear may be engaged pushing the pin further inside or taking it further out.

The mechanism is identical to the ones already described; the only difference is in the fact that the three EC move, by means of levers L, the pin P' for the engagement of the gears.

From figure 5 and form the possible movements of the EC the change operations may be seen.

In further variants, in many kinds of vehicles the EC may be more simply applied along the levers that transmit the movement of the gear lever to the gearbox.

The accelerator anulment mechanism or servo-accelerator SA may be provided on all vehicles through a very simple modification by means of two interventions. The first one is the application of a simple EC that may act on the lever of the carburetor throttle axis. The EC is already mounted onto a metal support that is to be fixed by means of brakes to the collector's bolts. The core of the EC is connected to the throttle's lever in that same point in which the accelerator's wire is connected.

The second intervention consists in the application of a return spring M' being somewhat stronger that the return spring of the accelerator along the accelerator's wire or transmission lever.

Figure 6 shows the working thereof: the driver's foot movement on the accelerator is transmitted to the throttle's lever and the inserted spring is strong enough not to be stretched due to this stress, transferring the movement without interfering. If however the exchange sends the electromagnet the direction, said electromagnet calls the throttle's lever into the zero position and the accelerator pedal has no more possibility, because on the EC power there is the spring placed along the stretching wire.

When the EC action stops the spring M' returns to the resting position and the throttle opens again according to the position of the accelerator pedal.

3

The mechanism for the insertion of the clutch or servo-clutch SF is realized by means of the application of a hydrodynamic oil or water or depression piston, that acts by pushing the clutch lever, said piston being stiffly fixed to a resting point onto the gearbox or on the motor block.

The main part of all vehicles are provided, on the gearbox or on the motor block, with a plurality of eyelets in which, by means of a bolt, an appropriately shaped bracket may be fixed, and on the main part of said bracket said piston is fixed. Obviously, the movable part of said piston will be fixed by means of a tie to the arm of the clutch lever projecting from the gearbox.

The electronic exchange consists in a small computer that may work on different programmes.

Said computer is connected:

in input :

a) with the five sensors and therefore is always updated for what concerns the speed V, the motor revolutions G, the engaged gear M, the position F of the clutch, the position of the accelerator A;

b) with the push-buttons P for the manual control and the programme change over;

in output: by means of relay R

b) with the three servo-control groups: servo-change gear SM, servo-accelerator SA, servo-clutch SF;

d) with the small starting contact block B, through which the starting and stopping of the motor may be controlled.

The push-button board for the manual control consists in a group of push-buttons placed on the instrument board nearby the steering wheel in a position easily reachable by the driver.

Of these push-buttons, three are:
- the control for the insertion of the automatic change gear;
- the control for the back gear RM;
- the control for the motor brake or release FM; the other push-buttons are the computer's programme change over.

The functioning of the electronic servo change gear obviously depends on the kind of chosen programme, as the driver may choose an automatism for different driving types. All programmes are variants of the base or standard programme hereinbelow described.

Programme no. 1 - standard programme:

it consists in three groups of main rules.

a) Running rules:

well determined speed intervals I.V. are dixed and memorized and each corresponds to a determined gear, e.g.:

| from 0 to 15 km/h | 1st gear |
| from 15 to 30 km/h | 2nd gear |
| from 30 to 45 km/h | 3rd gear |
| from 45 to 65 km/h | 4th gear |
| from 65 km/h on | 5th gear |

These intervals are memorized in the programme with different values, according to the vehicle on which said programme will be applied.

The programme provides that the computer will direct a change gear each time the speed reaches the upper or lower level of each single limit, as above described. Therefore, e.g., when the vehicle runs at 50 km/h, the computer will ask for the 4th gear, but as soon as the speed exceeds 65 km/h or goes lower that 45 km/h it straight away gives direction for passing to the 5th or 3rd gear respectively.

b) Rules of the 1st gear or starting

These rules are operating only in a speed interval comprised, e.g., between 0 and 6 km/h. This last limit is fixed according to the "minimum efficiency" revolutions being a feature of each motor, and also this number is memorized. In this case, and for exemplifying purposes, we determine the revolution number of minimum efficiency in 1.000.

In the speed interval above mentioned (0-6 km/h), the exchange will act as following: when the speed is zero and the accelerator is in the zero position the clutch will be disengaged and the engagement in the first gear will be automatic. As soon as the accelerator, being operated by the driver, leaves the zero position and the revolution number reaches the minimum efficienty, the computer sends the direction of a gradual clutch engagement, so that the revolution number never decreases below the minimum efficiency revolution number, but should this case happen, the computer itself will correct the action of the servo-clutch making slide the same.

When, however, the revolution number is above the minimum efficiency the clutch, controlled by the computer, will achieve a complete disengagement, adn from thereon the motor will receive only the driver's orders. Once the speed has reached the desired 6 km/h, in our case this programme cill be finished, but ready to stard working again should the speed again fall below 6 km/h.

All these actions tale place the acceleratator being freely commanded by the driver himdelf who will use the same according to his wishes: pushing it if he wants to go on, leaving it if he wants to slow down.

c) Rules for the pick-up

In the memory of the programme a rule is fixed according to which the computer wants the slow down to the smaller gear when the accelerator sensor gives the information that the accelerator (controlled by the driver) is placed in the maximum position thereof. This direction, however, which may be applied to all gears except for the first one, is given only if the speed of the vehicle is below a determined value (e.g. $\frac{1}{2}$ or 3/4) within each interval fixed for each single gear.

The practical functioning of changing gears is always the same.The computer, while directing the change in the increasing as well as in the decreasing relationship, always directs the same operation series having always the same order:

```
1) release of the clutch                    )  contemporary
2) release of the accelerator (minimum       ))
                                             ))
   motor revolutions)                        )  operations
3) change of gears
4) engagement of the clutch                  )) contemporary
5) freeing of the accelerator                ))
                                             )) operations
                                             )
```

whereby said computer will not allow one operation to take place if the preceding has not been completed.

As already mentioned, the electronic servo change gear described hereinbefore may work according to different programmes all memorized in the computer, and the driver may change the same at any moment by means of a simple switch over.

These alternative programmes are variants of the standard programme from which they vary, only for a small account, and of which they maintain the base structure, each for some added rules.

Hereinbelow, four alternative programmes, each with its own features, will be described.

Programme no. 2 - City-programme

It provides a single variant to the standard programme: the free wheel, i.e. the automatic neutral position each time the driver places the accelerator pedal in the 0 - minimum position. Indeed, it is not a real neutral positioning, but only the release of the clutch. Each time the computer records that the accelerator pedal is at the minimum, the same transmits to the servo clutch the direction to release the same clutch. As soon as the driver pushes the accelerator again, the computer gives the servo clutch the direction to re-engage the clutch. It is evident that the gears further follow the directions of the exchange which will change them as provided in the standard programme, i.e. according to the relationship of the vehicle and the limits determined for the speed intervals.

The great saving that may be obtained by means of this kind of driving is evident, in which the motor always keeps its minimum revolutions when its push is not needed. It shall be appropriate to make use of this programme only in the city and at low speeds. However, the programme may provide the automatic exclusion thereof with a return to the standard programme when the vehicle reaches a speed being e.g. higher that 50 km/h.

Programme no. 3 - Saving programme

It is the same programme, above described for the city, with the variant that the computer further directs the stopping of the motor when the engine is at speed 0 for more that five seconds. By means of the simple acting of the driver onto the accelerator pedal the computer determines first the starting of the motor and further more the engaging of the clutch like in a normal starting (rule of the first one) provided in the standard programme.

Obviously, there is already the first gear engaged according to what provided in that programma in which when the speed is = 0, there will always bee the first gear engaged and the clutch released.

The economical advantages - from the point of view of the wear and of the consumption of this programme - are evident.

Programme no. 4 - highway programme

It is a programme totally corresponding to the standard programme, except for the speed values determining the interval values delimiting the 3rd, 4th, 5th, said values being lowered with respect to the standard programme. Due to the kind of route, usually without great ascents and the vehicle being more or less always in the position.

This will confer a littler springing, but surely safer and more silent.

Programme no. 5 - a programme for a more quick driving It is the opposite from the highway programme. The speed values which limit the 2nd, 3rd, 4th and 5th gear intervals are fixed, in this programme, at higher levels. Therefore, the gears decrease or increase at a higher motor revolution number so that the motor always is at a higher running and therefore more powerful or with a better acceleration.

Programmes for semiautomatic operations

a) the back gear

In the push-buttons of the instrument panel there is the text for the back gear. Each programme provides in its memory the rules for the back gear. The same is inserted pushing push-button RM, but only if the vehicle's speed is 0 and the acceleration pedal not pushed (pos. 0 and therefore disengaged clutch).

The instructions for the gear are the same than those provided in the standard programme in the rules for the 1st gear.

Pushing the accelerator, the computer gives the servo-control of the clutch the same instructions and in the same order like in the starting, as described at the point "rules of the 1st gear", but being the rear gear engaged the vehicles moves backwards.

b) The motor brake

It is obtained by means of a pressure performed by the driver on push-button FM. The standard programme (the highway one and the one for quick driving) has memorized some instructions for the motor brake,whereby e.g. when the direction comes from the driver - which he has transmitted pushing push-button FM - the computer, after having verified some conditions listed hereinbelow, anuls for a determined time period (e.g. 15 seconds, or for the time the driver keeps pushed the push-button FM) those instructions concerning the speed intervals and directs the servo-control so as to engage the immediately lower gear. This operation may be repeated by the driver soon afterwards, so as to obtain a quick gear decrease.

With a minimum acceleration the slowing down of the vehicle will be obtained due to the resistance of the motor compression. These operations may be directed by the computer only if the speed of the vehicle is contained within determined maximum speeds fixed and memorized for each gear.

For example, the passage from the 5th to the 4th is allowed at any speed, while the passage from the 4th to the 3rd may take place only of the speed of the vehicle is below 110 km/h, the passage from the 3rd to the 2nd only if the speed is below 80 km/h and the passage from the 2nd to the 1st only if the speed is below 40 km/h. It is evident that said speed values are determined at different levels according to the kind of vehicle and to the features of the engine. Therefore, when the driver pushes push-button FM, the computer first controls all these elements and does not start the direction if the conditions are not those provided by the programme. If these conditions are fullfilled, the computer automatically disconnects the standard programme and directs the gear decrease.

When the provided time (15 seconds) has passed, or when the driver does no longer push push-button FM, the computer disconnects the FM programme and re-connects the standard programme and the gears will be changed automatically as described hereinbelow.

This FM programme may also work as gear decrease for acceleration. The driver may use said push-button FM to decrease to the lower gear and thus give the vehicle a better acceleration.

c) Half-automatic change

The apparatus according to the present invention may be provided, on request, with a more complex instrument panel with further five push-buttons, each corresponding to a gear.

When the driver pushes said push-buttons, he passes through the exchange, and orders the servo-change to engage the gear corresponding to the pushed push-button. A plurality of rules inserted in this programme prevent from damages due to carelessness or wrong operations (e.g. the direction concerning the engagement of a determined gear may not be performed if the vehicle is running at a speed not comprised within a determined interval: the first gear may not be engaged if the vehicle is running at 120 km/h ...).

This programme may be used by those who intend to partecipate in driving, or on particular roads. Above mentioned five push-buttons are excluded when the other programmes are inserted.

With an appropriate variant to the anulment mechanism of accelerator SA, described hereinbelow, the electronic servo-control may realize the perfect synchronism of the gear engagement.

For this purpose it will be enough to:
- mount, instead of the anulment EC of the standard accelerator, a hydrodynamic or depression piston which, being operated by the exchange, may assume different positions, so as to move the throttle lever for different openings corresponding each to determined motor revolutions;
- enrich the computer programme binding the same to the direction of the gear change, as provided by the programmes, only after above mentioned piston has placed, on its direction, the throttle lever for a determined opening (and therefore motor revolution number).

The choice of this position is effected by the computer on the basis of a serier of memorized rules which connect the optimal revolution number for each gear to the speed of the vehicle at that moment.

The right prolongation of the piston, for obtaining the desired opening, may be obtained in two different ways:

a) mechanically, directly. The computer will be able to direct the piston - due to the fact that in neutral position always the same revolution number corresponds to each throttle position - to get placed in that point that determines a throttle opening corresponding to the optimal revolution number for that determined gear at that speed of the vehicle.

For example, for the engagement of the first gear:

| speed from to km/h | revolution no. between and | throttle piston posi |
|---|---|---|
| 0 to 10 | 1.000 1.500 | A |
| 10 to 20 | 1.500 2.000 | B |
| . . . . . . . . . . . | . . . . . . . . . . . | |
| 40 to 50 | 4.500 5.000 | N |

for the second gear:

| | | |
|---|---|---|
| 15 to 25 | 2.000 2.500 | A |
| 25 to 35 | 2.500 3.000 | B |
| . . . . . . . . . . . | . . . . . . . . . . . | |
| 80 to 100 | 4.500 5.000 | N |

b) by means of feed back, i.e. with the constant intervention of the computer (which knows the revolution number) onto the piston so as to adjust it (by acceleration or slowing down) until that throttle opening, corresponding to the revolution number provided for that gear at the speed of the vehicle at that moment, is obtained.

## Claims

1. An electronic servo change for making automatic the change of gears in vehicles moved by an explosion engine, comprising the following elements:
   - a plurality of electronic sensors fed by the vehicle's battery for the evaluation of the speed (V), the motor's revolution number (G), the engaged gear (M), the position of clutch (F) and the position of the accelerator (A);
   - a plurality of electromechanical or hydraulic servo controls, consisting in electromagnet (EC/A, EC/B) and/or hydraulic pistons, that will perform the gear change operations and those operations connected thereto;
   - push-buttons for the manual control consisting in a plurality of push-buttons placed on the instrument panel;
   - an electronic exchange consisting in a computer (CE) connected, in input:
     a) to the five sensors, and therefore always updated on speed (V), motor revolutions (G), engaged gear (M), clutch position (F), accelerator position (A);
     b) to the instrument panel for the manual controls and the programme change;
     in output by means of relay (R)
     c) with the three servo control groups: servo change (SC), servo accelerator (SA), servo clutch (SF); characterized in that the computer (CE) is further connected in output by means of relay (R).
     d) to a small starting contact block (B) through which the starting or stopping of the engine may be directed, and in that the push-buttons for the manual control comprise:
     - a control for the insertion of the automatic change,
     - a control for the back gear (RM),
     - a control for the motor brake (FM) or release,
     - programme commutators for above mentioned computer (CE).

2. An electronic servo change according to claim 1, characterized in that said sensors are respectively placed: (M), at the basis of the change lever; (F), on the fulcrum of the clutch pedal; (A), on the carburetor's throttle axis; each one is connected to the computer to which it sends a message, that may also be sent to a light board on the instrument panel.

3. An electronic servo change according to claim 1, characterized in that the mechanism for the gear change consists in three electromagnets (EC) fixed on a metal support (S), the coordinate intervention whereof, at the level of the gearbox at the basis of the clutch, produces the movement of the lever (C) pushing the same into the position corresponding to each gear; said electromagnets may be of two kinds:
   - (EC/A), out of two sections, for the production of two releases in the same direction: the first release leads the core of the (EC) frontwards of a determined number of centimeters, the second release continues the same movement of the same length; the first movement will bring the lever (C) into the neutral position, making the same get out of the gear in which it was; the second movement that takes place only after the intervention of the (EC/B), pushes the lever (C) further, thus engaging a gear. One (EC/A) disengages the 2nd, 4th and back gear and engages the 1st, 3rd and 5th gear; the other (EC/A) disengages the 1st, 3rd and 5th gear and engages the 2nd, 4th and back gear;
   - (EC/B), out of two sections, provided for two releases, each in a sense opposite to the other so as to bring the core of the (EC) forewards or backwards of a determined number of centimeters; the movement of this (EC/B) pushes the gear lever along the horizontal line of the "H", to the left at the level of the 1st or 2nd gear or to the right at the level of the 5th or back gear; when the (EC/B) is in resting position, the lever automatically gets placed at the level of the 3rd and 4th gear, due to the inner spring provided in all series gears.

4. An electronic servo change according to claims 1 and 3, characterized in that the push of the (EC) is performed not directly on the lever by electromagnet(s) EC/A - EC/B but on a spring that, once wound up, transmits the movement to the lever in a softener way: the harsh stroke of the (EC) could otherwise damage the synchronizers.

5. An electronic servo change according to claim 1, characterized in the sequence of the operations for the gear change through the coordinate movement of the (EC) directed by the exchange:
   - release of the clutch (accelerator anulment);
   - first release of the (EC/A) that disengages the gear and places the lever in neutral position;
   - release of the (EC/B) that brings the lever at the level of the programmed gear;
   - second release of the (EC/A) that pushes the lever into the gear;
   - engagement of the clutch (free accelerator).

6. An electronic servo change according to claim 1, that may be applied to those vehicles that are not provided with a change gear in shape of an "H", characterized in that a pin (P) projects from the gearbox, for the control of the gears, that may assume three positions: a projecting one, a medium (neutral) one and a recessed one; furthermore, said pin may rotate on itself assuming two positions, beyond the resting one: clockwise: 1st and 2nd gear position; anti-clockwise: 5th and back gear position; in the central position, the resting one, it is provided for the engagement of the 3rd and 4th gear; the 1st or 2nd, 3rd or 4th, 5th or back gears are engaged by pushing further inside or outside said pin.

7. An electronic servo change according to claims 1 and 6, characterized in that the three (EC) move, by means of levers (L), the gear engagement pin (P).

8. An electronic servo change according to claim 1, characterized in the presence of an accelerator anulment mechanism consisting in an electromagnet (EC) acting on the throttle lever of the carburetor by means of the core thereof connected in the same connection point of the accelerator wire, and in a return spring (M') applied along the wire or the accelerator's transmission lever.

9. An electronic servo change according to claim 1, characterized in the presence of the clutch insertion mechanism consisting in a hydrodynamic, oil, air or depression piston that acts pushing the clutch lever, safely fixed to a resting point on the gearbox or the motor block.

10. An electronic servo change according to claim 1, for the optima synchronism of the gear change, characterized in the replacing of the (EC) with a hydrodynamic or depression piston acting on the throttle lever and which, directed by the exchange, may move into different positions, thus moving the throttle lever for different openings corresponding each to a determined motor revolution number.

**Patentansprüche**

1. Elektronische Servo + Schaltung um den Schaltvorgang bei Getrieben in Fahrzeugen, die durch eine gemischverdichtenden Vorrichtung angetrieben werden, automatisch zu gestalten, bestehend aus folgenden Elementen:
   - einer Vielzahl von elektronischen Sensoren, von der Fahrzeugbatterie gespeist, zur Geschwindigkeitsbestimmung (V), der Anzahl der Motorumdrehungen (G) , des eingeschalteten Ganges (M), der Lage der Kuplung (F) und der Lage des Gashebels (A);
   - einer Vielzahl von elektromagnetischen und hydraulischen Servoreglern, bestehend aus Elektromagnet (EC/A, EC/B) und/oder hydraulischen Kolben, die die Getriebewechselvorgänge und jene damit verbundenen Vorgänge ausführen;
   - Druck-Schaltern für die manuelle Kontrolle, bestehend aus einer Vielzahl von Druck-Schaltern, die auf der Instrumententafel vorgesehen sind;
   - einer elektronischen Zentrale, bestehend aus einem Komputer(CE), der durch Eingangsspeisung (input) verbunden ist mit:
   a) den fünf Sensoren, und demzufolge immer auf dem Laufenden in Bezug auf Geschwindigkeit (V), Motorumdrehungen (G), dem eingeschalteten Gang (M), Kupplungssituation (F), Beschleunigungssituation(A);
   b) der Instrumententafel zur manuellen Kontrolle und zum Programmwechsel;
   durch Ausgangsleistung (output), mittels Relais(R):
   c) mit den drei Servokontrollgruppen: Servogang (SC), Servogaspedal (SA), Servokupplung (SF);
   dadurch gekennzeichnet, daß der Komputer außerdem auch mittels Relais (R)in der Ausgangsleistung verbunden ist:

b) mit einem kleinen Startkontaktblock (B), durch welchen man den Start und das Anhalten der Maschine bestimmen kann und dadurch, daß die Druck-Schalter für die manuelle Kontrolle folgende Vorrichtungen enthalten:

- eine Kontrollvorrichtung zur Einschaltung des automatischen Ganges;
- eine Kontrollvorrichtung für das Rückgetriebe (RM);
- eine Kontrollvorrichtung für die Bremsung des Motors oder die Entkupplung;
- Programmkommutatoren für obigen Komputer(CE).

2. Elektronische Servo-Schaltung nach Anspruch 1, dadurch gekennzeichnet, daß besagte Sensoren jeweils folgendermaßen angeordnet sind: (M) auf der Basis des Schalthebels; (F) drehbar auf dem Kupplungspedal; (A) auf der Gashebelachse des Verbrenners; wobei jedes Teil mit dem Komputer, dem es Informationen sendet, verbunden ist und wobei diese Informationen auf einen Lichtschalter auf der Instrumententafel übertragen werden können.

3. Elektronisceh Servo-Schaltung nach Anspruch 1, dadurch gekennzeichnet, daß der Getriebemechanismus aus drei Elektromagneten (EC) besteht, die auf einem Metalluntersatz (S) befestigt sind, wobei dessen koordinierter Eingriff auf den Hebel des Getriebekastens an der Basis der Kupplung die Bewegung des Hebels (C) herbeiführt, wobei dieser in die einem jeden Getriebe entsprechende Stellung gedrückt wird; diese Elektromagneten können von zwei verschiedenen Arten sein:

- (CEC/A) bestehend aus zwei Sektionen um zwei Entkupplungsvorgänge in die gleiche Richtung hervorzurufen: der erste Entkupplungsvorgang leitet das Mittelstück des (EC) für eine gewisse Anzahl von Zentimetern vorwärts, der zweite Entkupplungsvorgang setzt die gleiche Bewegung über die gleiche Länge fort. Die erste Bewegung bringt den Hebel (C) in eine neutrale Stellung, indem sie ihn zum Austritt aus dem Getriebe bringt, in dem er war; die zweite Bewegung, die erst nach der Intervention des (EC/B) stattfindet, drückt den Hebel (C) weiter, was den Eingriff des Getriebes zur Folge hat.Ein (EC/A) kuppelt das zweite, vierte und das Rückgetriebe aus und setzt das erste, dritte und fünfte Getriebe in Gang; das andere (EC/A) gibt das erste, dritte und fünfte Getriebe frei und setzt das zweite, vierte und das Rückgetriebe in Gang.
- (EC/B) bestehend aus zwei Sektionen, vorgesehen für zwei Auslöse-einrichtungen, jede in entgegengesetzter Richtung zur anderen wirkend, um dadurch das Mittelstück des (EC) um eine bestimmte Anzahl von Zentimetern vorwärts oder rückwärts zu bringen. Die Bewegung dieses (EC/B) drückt den Getriebehebel entlang der horizontalen Linie von "H" auf der linken Seite auf die Höhe des ersten oder zweiten Getriebes oder auf der rechten Seite auf die Höhe des fünften oder des Rückgetriebes. Wenn sich das (EC/B) in Ruhestellung befindet, kommt der Hebel automatisch auf die Höhe des dritten und vierten Getriebes, durch die Innenfeder gedrückt, die in allen Seriengetrieben vorgesehen ist.

4. Elektronische Servo-Schaltung nach Anspruch 1 und 3, dadurch gekennzeichnet, daß der Druck von (EC) nicht direkt auf den Hebel durch Elektromagneten (EC/A, EC/B), sondern auf eine gespannte Feder ausgeübt wird, die die Bewegung abgeschwächt auf einen Hebel überträgt: der harte Aufschlag des (EC) könnte anderenfalls die Synchronismusanzeiger beschädigen.

5. Elektronische Servo-Schaltung nach Anspruch 1 durch die Reihenfolge der Arbeitsvorgänge zum Wechseln der Gänge mittels koordinierter Bewegung des (EC) gekennzeichnet, bestimmt durch die Zentrale:

- Freigabe der Kupplung (Aufhebung der Beschleunigung);
- erste Freigabe von (EC/A), wodurch das Getriebe ausgekuppelt und der Hebel in eine neutrale Stellung versetzt wird;
- Freigabe von (EC/B) wodurch der Hebel auf die Höhe des programmierten Getriebes gebracht wird;
- zweite Freigabe von (EC/A), wodurch der Hebel in das Getriebe eingeführt wird;
- Elngriff der Kupplung (Gashebel frei).

6. Elektronische Servo-Schaltung nach Anspruch 1, die bei Fahrzeugen, die nicht mit einem Wechselgetriebe in Form von "H" versehen sind, Anwendung finden kann, dadurch gekennzeichnet, daß ein Stift (P) aus einem Getriebekasten zur Kontrolle der Getriebe herausragt, welcher drei Stellungen einnehmen kann: eine hervorragende Stellung, eine zentrale (neutrale) Stellung, eine zurückliegende Stellung;

außerdem kann sich dieser Stift um sich selbst drehen, wobei er außer der Ruhestellung zwei Stellungen einnehmen kann: im Uhrzeigersinn: erste und dritte Getriebestellung; gegen den Uhrzeigersinn: fünfte Stellung und Rückstellung; in der Zentrallage, der Ruhestellung, ist er für das Einschalten des dritten und vierten Getriebes vorgesehen; das erste oder zweite, dritte oder vierte, fünfte oder das Rückgetriebe werden in Gang gesetzt indem besagter Stift noch mehr nach innen oder nach außen gedrückt wird.

7. Elektronische Servo-Schaltung nach Ansprüchen 1 bis 6, dadurch gekennzeichnet, daß die drei ((EC) mittels Hebeln (L) den Stift (P) bewegen, der das Getriebe zum Eingriff bringt.

8. Elektronische Servo-Schaltung nach Anspruch 1, durch die Anwesenheit eines Mechanismus, der die Beschleunigung aufhebt, gekennzeichnet, bestehend aus einem Elektromagnet (EC), der auf den Gashebel des Verbrenners einwirkt und zwar durch dessen Mittelstück , das in dem gleichen Verbindungspunkt des Beschleunigungshebels befestigt ist, und in einer Gegenfeder (M'), die entlang dem Kabel oder dem Hebel zur Beschleunigungsübertragung angebracht ist.

9. Elektronische Servo-Schaltung nach Anspruch 1, durch einen Mechnismus zum Einschalten der Kupplung gekennzeichnet, bestehend aus einem Hydrodynamischen-, Oel-, Luft- oder Druckkolben, der durch Druck auf den Kupplungshebel einwirkt, der fest mit dem Auflegepunkt auf dem Getriebekasten oder dem Motorblock verbunden ist.

10. Elektronische Servo-Schaltung nach Anspruch 1, zur optimalen Synchronisierung des Wechselgetriebes, gekennzeichnet durch das Auswechseln des (EC) durch einen Hydrodynamischen- oder Druckkolben, der auf den Gashebel einwirkt und der, durch die Zentrale geleitet, sich in verschiedene Richtungen bewegen kann und dadurch den Gashebel zu verschiedenen Auslösungen bewegt, wobei eine jede einer bestimmten Motorumdrehungszahl entspricht.

## Revendications

1. Un servochangement électronique pour faire automatique le changement des vitesses en véhicules ayant un moteur à explosion, comprenant les éléments suivants:
   - un ensemble de sensors éléctroniques alimentés par la batterie du véhicule pour la determination de la vitesse (V), le numero des révolutions du moteur (G), la vitesse engagée (M), la position de l'embrayage (F) et la position de l'accélérateur (A);
   - un ensemble de servocontrôles électromécanique ou hydraulique, consistant en pistons éléctromagnetiques (EC/A, EC/B) et/ou hydrauliques, qui vont réaliser les opérations de changement de vitesse et celles jointes;
   - poussoirs pour le contrôle manuel consistant en un ensemble de poussoirs placés sur le tableau de bord;
   - un changement électronique consistant en un computer (CE) joint, en input:
   a) aux cinq sensors, et, donc toujours actualisé en ce qui concerne la vitesse (V), les révolutions du moteur (G), la vitesse engagée (M), la position de l'embrayage (F), la position de l'accélérateur (A);
   b) au tableau de bord pour le contrôle manuel et le changement du programme;
   en output, au moyen d'une connexion (R):
   c) avec les trois servocontrôle groupes: servochangement (SC), servoaccélérateur (SA), servoembrayage (SF); caracterisé en ce que le computer (CE) est ultérieurement joint en output, au moyen d'une connexion (R):
   d) à un petit démarrage blob contact (B) par qui la mise en marche ou l'arrêt du moteur peut être dirigé, et en ce que les poussoirs pour le contrôle manuel comprennent:
     - un contrôle pour l'insertion du changement automatique,
     - un contrôle pour la marche arrière (RM),
     - un contrôle pour le frein du moteur (FM) ou débrayage,
     - un programme de commutateurs pour le susdit computer (CE).

2. Un servochangement électronique s'accordant à la revendication 1, caracterisé en ce que les susdits sensors sont placés respectivement: (M), à la base du levier du changement de vitesse; (F), sur le point d'appui de la pédale de débrayage; (A), sur l'axe de la vanne du carburateur; chaque sensor est joint au computer, auquel il envoye un message qui peut être aussi envoyé à une lumière sur le tableau de bord.

3. Un servochangement électronique s'accordant à la revendication 1, caracterisé en ce que le mécanisme pour la vitesse consiste en trois électroaimants (EC) fixés sur un support de métal (S), où l'intervention égale, au niveau de la boîte des vitesses à la base de l'embrayage, produit le mouvement du levier (C) poussant le même dans la position correspondant a chaque vitesse; les susdits électroaimants peuvent être de deux façons:

- (EC/A), de deux sections, pour la production de deux débrayages dans la même direction: le prémier débrayage conduit le noyau du (EC) en avant d'un déterminé numero de centimètres, le deuxiem débrayage continue le même mouvement de la même longueur. Le prémier mouvement conduit le levier (C) dans une position neutre, faisant que le même sorte de la vitesse où il était; le deuxiem mouvement qui a lieu seulement après l'intervention du (EC/B), pousse le levier (C) plus loin, ainsi engageant une vitesse. Un (EC/A) mets au point mort la deuxième vitesse, la quatrième vitesse et la marche arrière et engage la première, la troisième et la cinquième vitesse; l'autre (EC/A) mets au point mort la première, troisième et cinquième vitesse et engage la deuxième quatrième vitesse et la marche arrière.
- (EC/B), de deux sections, pourvu pour deux débrayages, chaque ayant lieu en un sens opposé à l'autre, de façon que le noyau du (EC) est conduit en avant ou en arrière d'un numero déterminé de centimètres. Le mouvement de ce (EC) pousse le levier du changement de vitesse dans la ligne horizontale de l'"H", à gauche, au niveau de la première ou deuxième vitesse, ou, à droite au niveau de la cinquième vitesse ou à ce de la marche arrière. Quand l'(EC/B) est en position de repos, le levier va automatiquement au niveau de la troisième ou quatrième vitesse pour le ressort intérieur duquel sont pourvues toutes les séries de vitesses.

4. Un servochangement électronique s'accordant aux revendications 1 et 3 caracterisé en ce que la poussée du (EC) n'est pas opérée directement sur le levier par l'électro-aimant(s) (EC/A, EC/B), mais sur un ressort qui, une fois chargé, transmet le mouvement au levier dans une façon plus douce: le fort coup du (EC) pourrait autrement endommager les synchroniseurs.

5. Un servochangement électronique s'accordant à la première revendication, caracterisé en cela suite des opérations pour le changement de vitesse par le mouvement égal du (EC) dirigé par l'aiguillage:
- débrayement (annulation de l'accélérateur);
- première relâche du (EC/A) qui débrayage la vitesse et place le levier dans la position neutre;
- débrayement du (EC/B) que conduit le levier au niveau de la vitesse programmée;
- deuxième relâche du (EC/A) que pousse le levier dans la vitesse;
- engagement de léembrayage (accélérateur libre).

6. Un servochangement électronique s'accordant à la revendication 1, que peut être appliqué à ceux véhicules qui ne sont pourvus pas d'un changement de vitesse de forme "H", caracterisé en ce qu'un piston (P) programme de la boîte de vitesse, pour le contrôle des vitesses, qui peuvent assumer trois positions: une projetante, une moyenne (neutre), et une reculée; aussi, cet piston peut tourner autour de lui même assumant deux positions, derrière celle du repos: dans le sens des aiguilles d'une montre: première et deuxième position de la vitesse; sens opposé: cinquième position et marche arrière; dans la position centrale, celle du repos, il est pourvu pour l'engagement de la troisième et quatrième vitesse: la première ou la deuxième, troisième ou quatrième, cinquième vitesse ou marche en arrière, sont engagées en poussant ultérieurement dedans ou à l'extérieur le susdit piston.

7. Un servochangement électronique s'accordant à les revendications 1 à 6 caracterisé en ce que les trois (EC) déplacent au moyen des leviers (L), le piston d'engagement de vitesse (P).

8. Un servochangement électronique s'accordant à la revendication 1, caracterisé en la presence d'un mécanisme d'annulment de l'accélérateur, consistant en un électro-aimant (EC) opérant sur le levier de la vanne du carburer au moyen du noyau joint dans le même point où est joint le fil de l'accélérateur et en un ressort de retour (M') appliqué autour du fil ou du levier de transmission de l'accélérateur.

9. Un servochangement électronique s'accordant à la revendication 1, caracterisé en la presence du mécanisme pour léembrayement consistant en un hydrodynamique, huile, air ou dépression piston qui opère poussant le levier de l'embrayage, fixé sûrement sur un point de repos sur la boîte des vitesses ou le bloc du moteur.

**10.** Un servochangement électronique s'accordant à la revendication 1, pour l'optimum synchronisme du changement de vitesse, caracterisé en l'aiguillage du (EC) avec un piston hydrodynamique ou de dépression opérant sur le levier de la vanne, et qui, dirigé par l'aiguillage, peut se déplacer en differents positions, ainsi deplaçant le levier de la vanne pour differents ouvertures, chaque correspondant à un numero fixé de révolutions du moteur.

FIG 1

FIG 2

FIG 3

C

EC/B

EC/A          EC/A

L

2        1

4        3

R        5

S

B"

F'

EC/B

EC/A

FIG 4

C

L

B"          B"          S

EC/B

EC/A

EC/A

L

L

P'

EC/A

EC/B

P'

L L

L

EC/A

EC/B

P'

**FIG 5**

M'

EC

**FIG 6**